(19) Europäisches Patentamt / European Patent Office / Office européen des brevets

(11) **EP 2 950 918 B1**

(12) **EUROPÄISCHE PATENTSCHRIFT**

(45) Veröffentlichungstag und Bekanntmachung des Hinweises auf die Patenterteilung:
**23.06.2021   Patentblatt 2021/25**

(21) Anmeldenummer: **13814511.5**

(22) Anmeldetag: **18.12.2013**

(51) Int Cl.:
**B01F 13/00** *(2006.01)*          **B65D 88/02** *(2006.01)*
**B65D 88/12** *(2006.01)*          **F16M 1/00** *(2006.01)*

(86) Internationale Anmeldenummer:
**PCT/EP2013/077053**

(87) Internationale Veröffentlichungsnummer:
**WO 2014/095974 (26.06.2014 Gazette 2014/26)**

(54) **PROZESSAGGREGAT UND VERWENDUNG MEHRERER PROZESSAGGREGATE**

PROCESSING UNIT AND USE OF A PLURALITY OF PROCESSING UNITS

UNITÉ DE TRAITEMENT ET UTILISATION DE PLUSIEURS UNITÉS DE TRAITEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.12.2012   DE 102012112815**

(43) Veröffentlichungstag der Anmeldung:
**09.12.2015   Patentblatt 2015/50**

(73) Patentinhaber: **Bayer Aktiengesellschaft**
**51373 Leverkusen (DE)**

(72) Erfinder:
- **FRYE, Lars**
  **42799 Leichlingen (DE)**
- **LIPSKI, Florian**
  **40235 Düsseldorf (DE)**
- **SCHMITZ, Stefan**
  **50735 Köln (DE)**
- **KRASBERG, Nicolai**
  **40764 Langenfeld (DE)**
- **GÜNTHER, Dietmar**
  **42499 Hückeswagen (DE)**
- **MEYER, Carsten**
  **50769 Köln (DE)**
- **CONZEN, Carsten**
  **51375 Leverkusen (DE)**
- **LIESENFELDER, Ulrich**
  **51469 Bergisch Gladbach (DE)**
- **STEINMEISTER, Ingo**
  **51377 Leverkusen (DE)**
- **BOOS, Karl-Robert**
  **51399 Burscheid (DE)**
- **GÜDEL,Wolfgang**
  **41464 Neuss (DE)**
- **KOECHING, Karl-Hermann**
  **41540 Dormagen (DE)**

(74) Vertreter: **BIP Patents**
**c/o Bayer Intellectual Property GmbH**
**Alfred-Nobel-Straße 10**
**40789 Monheim am Rhein (DE)**

(56) Entgegenhaltungen:
WO-A1-02/49941          WO-A1-2010/066281
FR-A1- 2 716 176          FR-A1- 2 837 495
US-A1- 2012 024 740

- **None**

**Beschreibung**

Die Arbeiten, die zu dieser Erfindung geführt haben, wurden gemäß der Finanzhilfevereinbarung Nr. 228867 im Zuge des Siebten Rahmenprogramms der Europäischen Union RP7/2007-2013 gefördert.

Die Erfindung betrifft ein Prozessaggregat sowie eine Verwendung mehrerer derartiger Prozessaggregate, mit deren Hilfe eine verfahrenstechnische Grundoperation durchgeführt oder zumindest unterstützt werden kann, um eine chemische Reaktion durchzuführen.

Für die Herstellung eines chemischen Produkts ist es erforderlich für die gewünschte Synthese des herzustellenden chemischen Produkts eine individuell gestaltete Anlagenstruktur zusammenzubauen, um die erforderlichen verfahrenstechnischen Prozessschritte durchführen zu können. Wenn die Herstellung dieses Produkts nicht mehr gewünscht ist, wird die Anlagenstruktur üblicherweise wieder abgerissen oder demontiert, um an der selben Stelle eine andere individuell gestaltete Anlagenstruktur zusammenzubauen, mit der ein anderes chemisches Produkt hergestellt werden kann. Die FR 2 837 495 A1 zeigt ein Prozessaggregat zur Unterstützung und/oder Durchführung einer verfahrenstechnischen Grundoperation für eine chemische Reaktion, mit einer Betriebseinheit zur Bereitstellung eines Beitrags für die verfahrenstechnische Grundoperation und einem Gestell zur Aufnahme der Betriebseinheit.

Es besteht ein ständiges Bedürfnis den Aufwand zur Durchführung von verschiedenen chemischen Reaktionen zu verringern.

Es ist die Aufgabe der Erfindung Maßnahmen anzugeben, die eine Durchführung von verschiedenen chemischen Reaktionen mit einem geringen Aufwand ermöglichen.

Die Lösung erfolgt erfindungsgemäß durch eine Kombination eines Standard-Transportcontainers und eines Prozessaggregats mit den Merkmalen des Anspruchs 1 sowie eine Verwendung mit den Merkmalen des Anspruchs 10. Bevorzugte Ausgestaltungen der Erfindung sind in den Unteransprüchen angegeben, die jeweils einzeln oder in Kombination einen Aspekt der Erfindung darstellen können.

Erfindungsgemäß ist ein Prozessaggregat zur Unterstützung und/oder Durchführung einer verfahrenstechnischen Grundoperation für eine chemische Reaktion vorgesehen mit einer Betriebseinheit zur Bereitstellung eines Beitrags für die verfahrenstechnische Grundoperation und einem Gestell zur Aufnahme der Betriebseinheit, wobei das Gestell eine Erstreckung $d_L$ in Längsrichtung aufweist, die im Wesentlichen einem ganzzahligen Vielfachen $Z_L$ eines ganzzahligen Teils $N_L$ einer Erstreckung $L_L$ in Längsrichtung eines Innenraums eines Standard-Transportcontainers, insbesondere nach DIN ISO 668, entspricht und/oder das Gestell eine Erstreckung $d_Q$ in Querrichtung aufweist, die im Wesentlichen einem ganzzahligen Vielfachen $Z_Q$ eines ganzzahligen Teils $N_Q$ einer Erstreckung $L_Q$ in Querrichtung eines Innenraums eines Standard-Transportcontainers, insbesondere nach DIN ISO 668, entspricht.

Der Standard-Transportcontainer, bei dem es sich insbesondere um einen Transportcontainer der Gattung 1C ("20 Fuß Container") nach DIN ISO 668 oder der Gattung 1D ("10 Fuß Container") nach DIN ISO 668 handelt, stellt einen weltweit gebräuchlichen Standard dar, dessen Erstreckung in Längsrichtung, Querrichtung und Höhe im Wesentlichen weltweit standardisiert ist. Bei einer rechteckigen Grundfläche des Innenraums des Standard-Transportcontainer definiert die längere Seite die Längsrichtung und die kürzere Seite die Querrichtung. Ein derartiger Standard-Transportcontainer kann insbesondere zum Transport mit einem LKW und/oder einem Hochsee-Containerschiff genutzt werden. So weist der Innenraum des Standard-Transportcontainer der Gattung 1C eine Länge $L_L$ von 5867 mm, eine Breite $L_Q$ von 2330 mm und eine Höhe $L_H$ von 2197 mm auf, während der Innenraum des Standard-Transportcontainer der Gattung 1D eine Länge $L_L$ von 2802 mm, eine Breite $L_Q$ von 2330 mm und eine Höhe $L_H$ von 2197 mm aufweist. Die verfügbare Stellfläche dieses Standard-Transportcontainers wird in mehrere gleichgroße gedachte logische Flächen unterteilt. Die Standfläche des Prozessaggregats entspricht im Wesentlichen genau dieser logischen Fläche oder einem ganzzahligen Vielfachen dieser logischen Fläche, wobei bei der Bemessung der durch das Gestell begrenzten Standfläche des Prozessaggregats etwas Luft zwischen benachbarten logischen Flächen des Standard-Transportcontainers vorgesehen sein kann ("Spaltmaß").

Vorzugsweise wird ein Standard-Transportcontainers der Gattung 1C in Längsrichtung mit $N_L$ = 10 und in Querrichtung mit $N_Q$ = 4 unterteilt, so dass sich mit $Z_L$ = 1 und $Z_Q$ = 1 für das Gestell eine minimale Erstreckung in Längsrichtung von $d_{L,min}$ = 570 mm $\pm$ 15 mm und eine minimale Erstreckung in Querrichtung von $d_{Q,min}$ = 570 mm $\pm$ 5 mm ergeben kann. Die von dem Prozessaggregat unterstützte und/oder durchzuführende verfahrenstechnische Grundoperation hat dadurch insbesondere grundsätzlich auf einer Fläche von $d_{L,min}$ x $d_{Q,min}$ stattzufinden. Falls diese Fläche hierfür nicht ausreichend sein sollte, kann das Gestell um ein ganzzahliges Vielfaches in Längsrichtung und/oder Querrichtung vergrößert werden, so dass die von dem Prozessaggregat unterstützte und/oder durchzuführende verfahrenstechnischen Grundoperation auf einer Fläche von maximal ($Z_L$ $d_{L,min}$) x ($Z_Q$ $d_{Q,min}$) stattfinden kann, wobei $Z_L \leq N_L$ und $Z_Q \leq N_Q$ gilt. Für die Erstreckung des Gestells in Längsrichtung gilt somit $d_L = Z_L$ $d_{L,min}$ mit $Z_L$ = 1...$N_L$, während für die Erstreckung des Gestells in Querrichtung $d_Q = Z_Q$ $d_{Q,min}$ mit $Z_Q$ = 1...$N_Q$ gilt. Ferner gilt $N_L$, $N_Q$, $Z_L$, $Z_Q \in \mathbb{N}$. Vorzugsweise gilt $2 \leq N_L \leq 40$, insbesondere $3 \leq N_L \leq 20$, vorzugsweise $4 \leq N_L \leq 10$ und besonders

bevorzugt $5 \leq N_L \leq 8$. Vorzugsweise gilt $2 \leq N_Q \leq 10$, insbesondere $3 \leq N_Q \leq 8$ und besonders bevorzugt $4 \leq N_Q \leq 6$. Wenn zwischen benachbarten Prozessaggregaten in Längsrichtung ein Spaltmaß $S_L$ und/oder in Querrichtung ein Spaltmaß $S_Q$ vorgesehen ist, wird vorzugsweise dieses Spaltmaß S bei der Bestimmung von $d_L$ und $d_Q$ berücksichtigt, so dass eine konstante Rasterung des Standard-Transportcontainers beibehalten werden kann. In diesem Fall gilt insbesondere $d_L = Z_L\, d_{L,min} + (Z_L - 1)\, S_L$ mit $Z_L = 1...N_L$ und/oder $d_Q = Z_Q\, d_{Q,min} + (Z_Q - 1)\, S_Q$ mit $Z_Q = 1...N_Q$.

Insbesondere ist die Erstreckung des Gestells in Längsrichtung und in Querrichtung derart gewählt, dass bei einer maximal möglichen Anzahl an Prozessaggregaten in dem Standard-Transportcontainer über 95% der verfügbaren Stellfläche des Standard-Transportcontainers von den Prozessaggregaten genutzt ist. Vorzugsweise gilt $0,9 \leq (N_L\, d_{L,min})/L_L \leq 1,0$, insbesondere $0,95 \leq (N_L\, d_{L,min})/L_L \leq 0,99$ und besonders bevorzugt $0,97 \leq (N_L\, d_{L,min})/L_L \leq 0,98$. Entsprechend gilt insbesondere $0,9 \leq (N_Q\, d_{Q,min})/L_Q \leq 1,0$, insbesondere $0,95 \leq (N_Q\, d_{Q,min})/L_Q \leq 0,99$ und besonders bevorzugt $0,97 \leq (N_Q\, d_{Q,min})/L_Q \leq 0,98$. Vorzugsweise gilt $0,95 \leq [(N_L\, d_{L,min})(N_Q\, d_{Q,min})]/(L_L\, L_Q) \leq 1,0$ und besonders bevorzugt $0,97 \leq [(N_L\, d_{L,min})(N_Q\, d_{Q,min})]/(L_L\, L_Q) \leq 0,99$. Insbesondere gilt $450\ mm \leq d_{L,min} \leq 650\ mm$, vorzugsweise $500\ mm \leq d_{L,min} \leq 600\ mm$ und besonders bevorzugt $d_{L,min} = °570\ mm \pm 15\ mm$. Entsprechend gilt insbesondere $450\ mm \leq d_{Q,min} \leq 650\ mm$, vorzugsweise $500\ mm \leq d_{Q,min} \leq 600\ mm$ und besonders bevorzugt $d_{Q,min} = °570\ mm \pm 5\ mm$.

Durch diese Standardisierung der Abmessung des Prozessaggregats ist es möglich mehrere Prozessaggregate, die verschiedene verfahrenstechnische Grundoperationen für die geplante chemische Reaktion, insbesondere eine chemische Batch-Reaktion und/oder eine kontinuierliche chemische Reaktion, unterstützen und/oder durchführen sollen, in dem Standard-Transportcontainer in einer geordneten Struktur innerhalb des Standard-Transportcontainers zu platzieren und miteinander, insbesondere zum Stoffaustausch und/oder Energieaustausch und/oder Informationsaustausch, zu verschalten. Die innerhalb des Standard-Transportcontainers realisierte Anlagenstruktur kann durch mehrere miteinander verschaltete standardisierte Prozessaggregate zusammengesetzt sein, so dass es beispielsweise möglich ist verschiedene Prozessaggregate für verschiedene verfahrenstechnische Grundoperationen in einem Pool vorzuhalten und je nach erforderlicher Anlagenstruktur für die Synthese eines bestimmten chemischen Produkts modular in dem Standard-Transportcontainer flexibel zusammenzusetzen, wodurch eine Durchführung von verschiedenen insbesondere kontinuierlichen, chemischen Reaktionen, mit einem geringen Aufwand ermöglicht ist.

Als verfahrenstechnische Grundoperation wird grundsätzlich jeder Prozess verstanden, bei dem mindestens ein Stoff nach Art, Eigenschaft und/oder Zusammensetzung, insbesondere durch die Nutzung chemisch-physikalischer oder biologischer Vorgänge, verändert wird. Vorzugsweise wird in dem Prozessaggregat nur genau eine verfahrenstechnische Grundoperation durchgeführt, wodurch die Austauschbarkeit und Wiederverwendbarkeit für verschiedene chemische Reaktionen verbessert ist. Eine verfahrenstechnische Grundoperation ist beispielsweise Mischen, Trennen, Agglomerieren, Zerkleinern, Heizen, Kühlen, Trocknen, Filtern, Destillieren, Oxidieren, Hydrieren. Polymerisieren, Gären, Galvanisieren. Die von der Betriebseinheit des Prozessaggregats unterstütze und/oder ausgeführte verfahrenstechnische Grundoperation geht insbesondere über einen reinen Stofftransport hinaus und beschränkt sich nicht auf Lagern oder Fördern.

Das Gestell weist insbesondere im Wesentlichen vertikal verlaufende Stützstreben auf. Vorzugsweise sind vier Stützstreben vorgesehen, welche in den Ecken eines gedachten Rechtecks mit den Kantenlängen $d_L$ und $d_Q$ angeordnet sind. Die Stützstreben können über im Wesentlichen horizontal verlaufende Böden und/oder im Wesentlichen vertikal verlaufende Seitenwände und/oder Verbindungsstreben miteinander verbunden sein. Das Gestell kann ein Volumen begrenzen, in dem die Betriebseinheit positioniert ist. Die Betriebseinheit kann mit dem Gestell im Wesentlichen bewegungsfest verbunden sein. Insbesondere sind in dem Gestell geeignete Aussparungen vorgesehen, die eine Verschaltung der Betriebseinheit mit mindestens einer anderen Betriebseinheit eines anderen Prozessaggregats ermöglicht.

Insbesondere weist das Gestell eine Höhe $d_H$ auf, die im Wesentlichen einem ganzzahligen Vielfachen $Z_H$ des ganzzahligen Teils $N_L$ der Erstreckung $L_L$ in Längsrichtung oder des ganzzahligen Teils $N_Q$ der Erstreckung $L_Q$ in Querrichtung des Innenraums des Standard-Transportcontainers entspricht. Dies ermöglicht es insbesondere die Abmessungen des Prozessaggregats im Wesentlichen würfelförmig und/oder aus gedachten Würfeln zusammengesetzt auszugestalten. Insbesondere gilt $d_H = Z_H\, L_L/N_L$ oder $d_H = Z_H\, L_Q/N_Q$. Vorzugsweise gilt $d_H = Z_H\, d_{L,min}$ oder $d_H = Z_H\, d_{Q,min}$, wobei $d_{L,min}$ und/oder $d_{Q,min}$ insbesondere unter Berücksichtigung eines Spaltmaßes S bestimmt wurde. Ferner gilt $Z_H \in \mathbb{N}$. Vorzugsweise gilt $1 \leq Z_H \leq 5$ und besonders bevorzugt $2 \leq Z_H \leq 4$. Ferner ermöglicht diese Dimensionierung der Höhe des Gestells, dass oberhalb und/oder unterhalb des Prozessaggregats innerhalb des Standard-Transportcontainers ein Freiraum verbleibt, dessen Erstreckung in vertikaler Richtung insbesondere kleiner als $L_L/N_L$ oder $L_Q/N_Q$ ist. In diesem Freiraum können Versorgungsleitungen für Stoff, Energie und/oder Information vorgesehen werden, die mit verschiedenen Prozessaggregaten leicht zugänglich verbunden werden können.

Vorzugsweise ist die minimale Erstreckung $d_{min}$

des Gestells in Längsrichtung und/oder in Querrichtung bei einer Gesamterstreckung L des Innenraums des Standard-Transportcontainers in Längsrichtung beziehungsweise in Querrichtung und einer ganzzahligen Teilung N unter Berücksichtigung eines Spaltmaßes S nach $d_{min} = (L-(N+1)S)/N$ bestimmt, wobei insbesondere 1 mm $\leq$ S $\leq$ 50 mm, vorzugsweise 2 mm $\leq$ S $\leq$ 30 mm, weiter bevorzugt 3 mm $\leq$ S $\leq$ 20 mm und besonders bevorzugt 4 mm $\leq$ S $\leq$ 15 mm gilt. Dadurch ergibt sich für die Längsrichtung $d_{L,min} = (L_L-(N_L+1)S_L)/N_L$ und in Querrichtung $d_{Q,min} = (L_Q-(N_Q+1)S_Q)/N_Q$. Durch das Spaltmaß sind die einzelnen Prozessaggregate leichter zugänglich und insbesondere bei einem Einbau und/oder Ausbau leichter handhabbar. Ferner ergibt sich erforderlichenfalls eine bessere passive Kühlung des Prozessaggregats. Dadurch lässt sich insbesondere ein Hitzestau bei elektrisch betriebenen Komponenten für den Betrieb der Betriebseinheit vermeiden.

Besonders bevorzugt entspricht die minimale Erstreckung $d_{L,min}$ des Gestells in Längsrichtung im Wesentlichen der minimalen Erstreckung $d_{Q,min}$ des Gestells in Querrichtung, wobei insbesondere die minimale Höhe $d_{H,min}$ des Gestells im Wesentlichen der minimalen Erstreckung $d_{L,min}$ des Gestells in Längsrichtung und/oder der minimalen Erstreckung $d_{Q,min}$ des Gestells in Querrichtung entspricht. Die minimale Stellfläche für das Prozessaggregat kann dadurch im Wesentlichen quadratisch ausgestaltet sein. Dies ermöglicht es das Prozessaggregat um 90° versetzt in dem Standard-Transportcontainer zu befestigen, wodurch sich die Verschaltung und Zugänglichkeit verschiedener Prozessaggregate vereinfacht. Beispielsweise können mehrere Prozessaggregate innerhalb des Standard-Transportcontainers L-förmig in Längsrichtung und Querrichtung angeordnet werden.

Insbesondere ist innerhalb des Gestells, insbesondere unterhalb der Betriebseinheit, eine mit der Betriebseinheit verbundene oder mit der Betriebseinheit unverbundene Abwasserleitung vorgesehen, wobei die Abwasserleitung mindestens einen, vorzugsweise mindestens zwei, aus dem Gestell seitlich heraus weisenden Rohrflansch aufweist. Nicht mehr benötigte Stoffe und/oder erwünschte Produkte können dadurch schwerkraftbedingt der Abwasserleitung zugeführt werden, wobei es möglich ist für verschiedene Stoffströme verschiedene Leitungen vorzusehen. Hierbei ist es möglich, dass diese Abwasserleitung von dem Prozessaggregat mitgenutzt wird, indem die Abwasserleitung in geeigneter Form mit der Betriebseinheit verbunden ist. Insbesondere ist es möglich, dass die Abwasserleitung zur Durchfuhr eines Stoffstroms von einem anderen Prozessaggregat vorgesehen ist. Dadurch kann auch von einem Prozessaggregat, das vergleichsweise weit weg von einem zugehörigen Auslass und/oder einem zugehörigen Speicher positioniert ist, ein Stoffstrom leicht durch dazwischen positionierte andere Prozessaggregate hindurchgeführt werden. Hierfür ist es insbesondere nicht erforderlich eine gesonderte durch die entsprechenden Prozessaggregate hindurch geführte Leitung vorzusehen. Stattdessen kann auch ein Prozessaggregat, das diese Abwasserleitung für ihre Betriebseinheit nicht benötigt, einen entsprechenden Teil der erforderlichen Leitungsstrecke durch ihre Abwasserleitung bereitstellen.

Vorzugsweise ist mindestens eine mit der Betriebseinheit verbundene oder mit der Betriebseinheit unverbundene Fördereinheit zum Stofftransport von und/oder zu einem benachbarten Prozessaggregat vorgesehen. Durch die Fördereinheit kann insbesondere ein innerhalb des Prozessaggregats auftretender Druckverlust beim Stofftransport ausgeglichen und/oder zum Aufbau eines entsprechend hohen Förderdruckes überkompensiert werden. Insbesondere wenn ein Stofftransport durch mehrere nacheinander angeordnete Prozessaggregate erfolgen soll, kann durch die Fördereinheit sichergestellt werden, dass unabhängig von der gesamten Förderstrecke ein gewünschter Förderdruck aufrecht erhalten werden kann. Die Dimensionierung der Fördereinheit des Prozessaggregats kann damit im Wesentlichen unabhängig vom zu erwartenden Druckverlust über die gesamte Förderstrecke erfolgen. Dies erleichtert die Austauschbarkeit und Wiederverwendbarkeit des Prozessaggregats für verschiedene chemische Reaktionen.

Besonders bevorzugt ist das Gestell mit einem Boden verbunden, wobei der Boden über Füße zur Befestigung mit einem Untergrund beabstandet zu dem Untergrund positioniert ist. Über die Füße kann das Gestell und damit das Prozessaggregat beispielsweise mit dem Untergrund fest aber lösbar verbunden werden. Durch die beabstandete Anordnung des Bodens zum Untergrund verbleibt ein im Wesentlichen durch die vertikale Erstreckung der Füße definierter Spalt, der erforderlichenfalls für weitere Zwecke, beispielsweise zur Verlegung von Stromkabeln für den Betrieb von Messgeräten, genutzt werden kann. Insbesondere ist es möglich versteifende Querbalken vorzusehen, welche die Stabilität des Standard-Transportcontainers erhöhen können und das Gewicht der vorzugsweise mit den Querbalken verbundenen Prozessaggregate abtragen können. Die Mittellinien der Querbalken sind vorzugsweise um $d_{L,min}$ oder $d_{Q,min}$ zueinander beabstandet. Insbesondere ermöglicht der Abstand des Bodens zum Untergrund eine leichte optische Kontrolle des Untergrunds, wodurch Leckagen oder sonstige Defekte des Prozessaggregats leicht erkannt werden können. Ferner ist es möglich das Prozessaggregat mit einem Gabelstapler zu untergreifen und leicht zu transportieren, wodurch der Umbau der Anlagenstruktur vereinfacht ist. Vorzugsweise entsprechen die Abmessungen des Bodens im Wesentlichen den Abmessungen einer Standard-Palette oder einem Viertel der Abmessungen einer Standard-Palette, so dass der Transport der Prozessaggregate mit Hilfe eines Gabelstaplers und/oder die Lagerung eines größeren Prozessaggregats oder die Lagerung mehrerer kleinerer Prozessaggregate auf einer Standard-Palette vereinfacht ist. Insbesondere ist es möglich mehrere kleinere Prozessaggregate, die auf einer Standard-Palette abgestellt sind, gemeinsam mit Hilfe eines Gabelstaplers zu bewegen. Vorzugsweise ist das Gestell des Prozessaggregats bezüglich der mechanischen Stabilität derart dimensioniert, dass Paletten mit Prozessaggregaten übereinander gestapelt werden können. Eine derartige mechanische Stabilität des Gestells ist in der Regel ausreichend um selbst bei einer Explosion innerhalb des Standard-Transportcontainers irreparable Deformationen des Gestells und/oder des Prozessaggregats zu verhindern.

Insbesondere sind unterhalb der Betriebseinheit mit der Betriebseinheit verbundene Unterstützungsapparate, insbesondere Messeinrichtungen, für den Betrieb der Betriebseinheit vorgesehen. Das Prozessaggregat kann insbesondere über eine definierte Höhe den Unterstützungsbereich, beispielsweise für Messeinrichtungen oder Abwasserleitungen, über eine definierte Höhe einen Betriebsbereich für die Betriebseinheit und über eine definierte Höhe einen Schnittstellenbereich zum Anschluss des Prozessaggregats an ein Versorgungsnetz für Stoff und/oder Energie und/oder Information aufweisen. Wenn diese Bereiche für alle verwendeten Prozessaggregate im Wesentlichen auf der gleichen Höhe vorgesehen sind, wird die Austauschbarkeit und Wiederverwendbarkeit des Prozessaggregats für verschiedene chemische Reaktionen weiter verbessert. Insbesondere kann die Betriebseinheit auf einem Teil einer Messeinrichtung aufliegen, das beispielsweise mit Hilfe eines Dehnungsmessstreifen das Gewicht der Betriebseinheit messen kann. Dadurch kann beispielsweise ein Füllstand gemessen werden. Ferner ist es möglich mit einer Messeinrichtung zur Messung eines Durchflusses einen Volumenstrom zu messen und/oder zu regeln.

Vorzugsweise ist oberhalb der Betriebseinheit ein mit der Betriebseinheit verbundenes Schnittstellenmodul zur Aufnahme von Stoff und/oder Energie und/oder Information vorgesehen. Dies ermöglicht es die Betriebseinheit des Prozessaggregats über Kopf mit einem Stoff- und/oder Energie- und/oder Informationsaustausch zu versehen. Dadurch lassen sich besonders einfach mehrere Prozessaggregate über Kopf miteinander verknüpfen und/oder mit einem gemeinsamen Versorgungsnetz verbinden. Beispielsweise kann das über das Schnittstellenmodul angeschlossene Versorgungsnetz einen Datenbus aufweisen, der Informationen, insbesondere Messergebnisse, anderer Prozessaggregate zur Verfügung stellt, wodurch eine verbesserte Regelung, insbesondere eine Feed-Forward-Regelung, für das angeschlossene Prozessaggregat in Abhängigkeit des Zustands der anderen Prozessaggregate ermöglicht wird. Ferner kann über das Schnittstellenmodul elektrische Energie, Dampf, Druckluft oder ähnliches dem Versorgungsnetz bei Bedarf entnommen werden. Vorzugsweise weist das Schnittstellenmodul eine Steuerung auf, die beispielsweise in Reaktion auf ein Regelsignal eines Reglers einen definierten Austausch mit dem Versorgungsnetz, insbesondere zum Stoffaustausch, ermöglicht.

Die Erfindung betrifft ferner eine Verwendung mehrerer mittelbar oder unmittelbar miteinander verbundener Prozessaggregate, die wie vorstehend beschrieben aus- und weitergebildet sein können, in einem gemeinsamen Standard-Transportcontainer, insbesondere nach DIN ISO 668, zur Ausbildung einer Produktionsanlage für die Durchführung einer chemischen Reaktion. Dadurch ist es beispielsweise möglich verschiedene Prozessaggregate für verschiedene verfahrenstechnische Grundoperationen in einem Pool vorzuhalten und je nach erforderlicher Anlagenstruktur für die Synthese eines bestimmten chemischen Produkts modular in dem Standard-Transportcontainer flexibel zusammenzusetzen, wodurch eine Durchführung von verschiedenen chemischen Reaktionen mit einem geringen Aufwand ermöglicht ist.

Nachfolgend wird die Erfindung unter Bezugnahme auf die anliegenden Zeichnungen anhand bevorzugter Ausführungsbeispiele exemplarisch erläutert, wobei die nachfolgend dargestellten

Merkmale sowohl jeweils einzeln als auch in Kombination einen Aspekt der Erfindung darstellen können. Es zeigen:

Fig. 1: eine schematische perspektivische Konzeptansicht eines Standard-Transportcontainers,

Fig. 2: eine schematische perspektivische Konzeptansicht des Standard-Transportcontainers aus

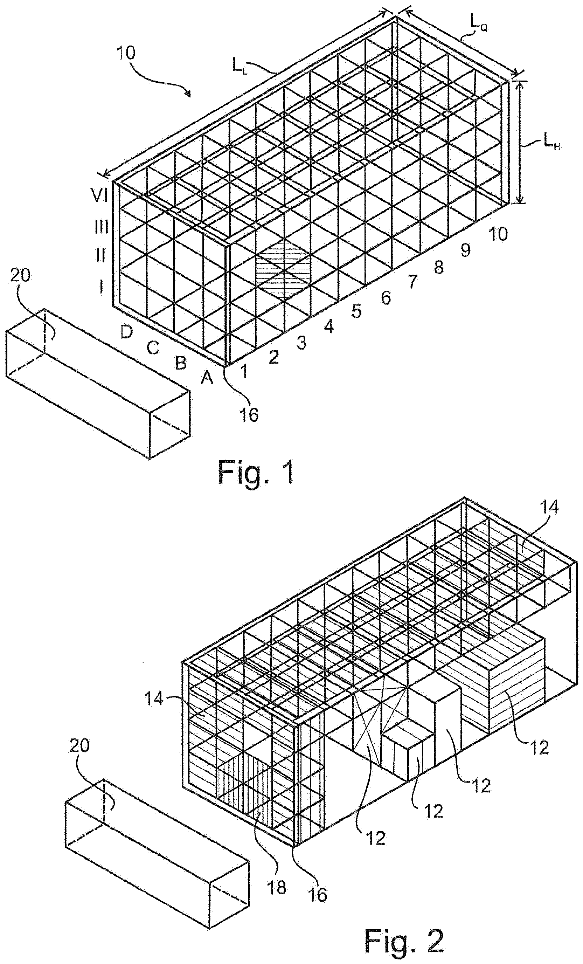

Fig. 1 mit verschiedenen konzeptionell dargestellten Prozessaggregaten,

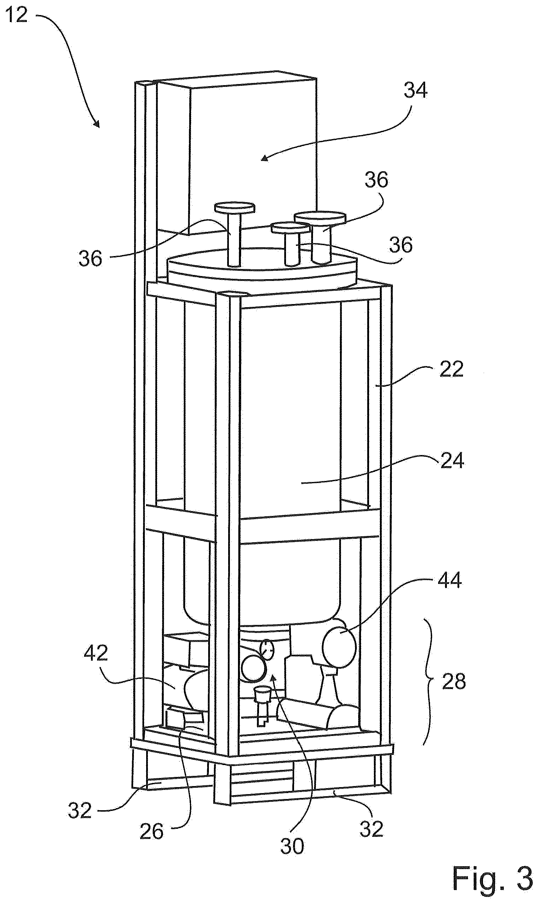

Fig. 3: eine schematische perspektivische Ansicht eines Beispiels eines Prozessaggregats für den Standard-Transportcontainer aus Fig. 1,

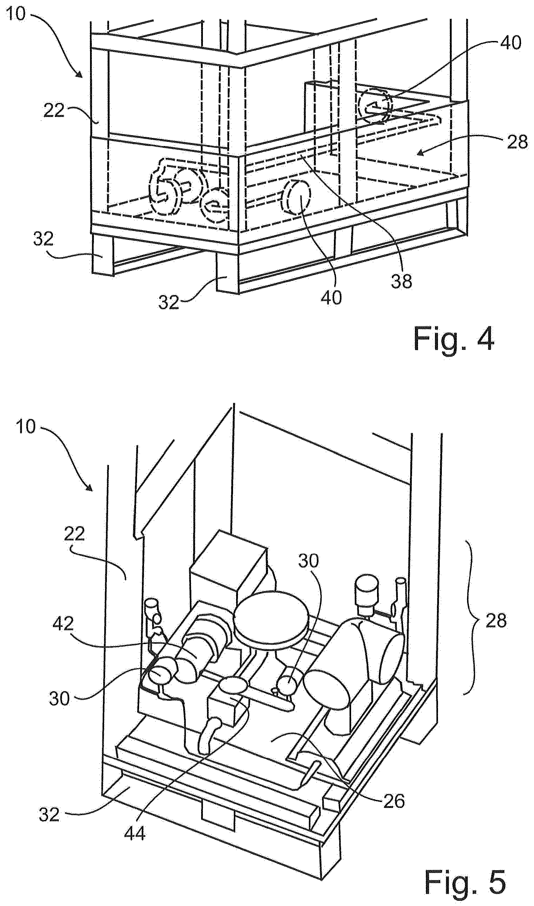

Fig. 4: eine schematische perspektivische Ansicht eines unteren Bereichs eines Prozessaggregats für den Standard-Transportcontainer aus Fig. 1 und

Fig. 5: eine schematische perspektivische Ansicht eines Unterstützungsbereichs eines Prozessaggregats für den Standard-Transportcontainer aus Fig. 1.

Ein Innenraum des in Fig. 1 dargestellten Standard-Transportcontainers 10 der Gattung 1C nach DIN ISO 668 weist in Längsrichtung eine Erstreckung von $L_L$ = 5867 mm, in Querrichtung eine Erstreckung von $L_Q$ = 2300 mm und eine Höhe von $L_H$ = 2197 mm auf. Die Erstreckung $L_L$ in Längsrichtung ist in $N_L$ = 10 im Wesentlichen gleich große gedachte logische Einheiten unterteilt, so dass sich für jede logische Einheit eine Strecke in Längsrichtung von im Wesentlichen $d_{L,min}$ = 570 mm ergibt. Die Erstreckung $L_Q$ in Querrichtung ist in $N_Q$ = 4 im Wesentlichen gleich große gedachte logische Einheiten unterteilt, so dass sich für jede logische Einheit eine Strecke in Querrichtung von ebenfalls im Wesentlichen $d_{Q,min}$ = 570 mm ergibt. Wie in Fig. 2 dargestellt, können in dem Innenraum des Standard-Transportcontainers 10 mehrere Prozessaggregate 12 angeordnet werden, die sich an der gedachten Rasterung des Standard-Transportcontainers 10 orientieren. Das bedeutet, dass jeder der vorgesehenen Prozessaggregate 12 in Längsrichtung eine Erstreckung von $d_L$ und in Querrichtung eine Erstreckung von $d_Q$ aufweist, die jeweils im Wesentlichen ein ganzzahliges Vielfaches von $d_{L,min}$ beziehungsweise $d_{Q,min}$ ist. Für das Prozessaggregat 12 ist ferner eine minimale Höhe von $d_{H,min}$ = 570 mm vorgegeben, so dass das kleinste Prozessaggregat 12 die Größe eines Würfels mit einer Kantenlänge von 570 mm aufweist. Die Abmessungen jedes verwendeten größeren Prozessaggregats 12 entsprechen im Wesentlichen einem ganzzahligen Vielfachen dieses Würfels.

Durch die Wahl der minimalen Höhe für das Prozessaggregat 12 von $d_{H,min}$ = 570 mm kann für das Prozessaggregat 12 eine maximal Höhe vorgesehen werden, die um den Faktor $Z_H$ = 3 ein Vielfaches von $d_{H,min}$ sein kann, um noch in den Innenraum des Standard-Transportcontainers 10 zu passen. Dadurch verbleibt in dem dargestellten Ausführungsbeispiel ein oberer Bereich mit einer Höhe von 460 mm. Dieser Bereich ist groß genug, um dort ein Versorgungsnetz 14 vorzusehen, das an nahezu jeder beliebigen Stelle innerhalb des Standard-Transportcontainers 10 über Kopf das jeweilige Prozessaggregat 12 mit Stoff, Energie und/oder Information versorgen kann. Der obere Bereich ist insbesondere frei von Teilen des Prozessaggregats 12. Es ist jedoch möglich, dass das Versorgungsnetz 14 genügend Volumen in dem oberen Bereich frei lässt, dass ein Prozessaggregat 12 in das freigelassene Volumen des oberen Bereichs hineinragen kann. Das Versorgungsnetz erstreckt sich insbesondere über ein Volumen an einer Stirnseite 16 des Standard-Transportcontainers 10, das der vorgegeben Rasterung entspricht oder eine in Längsrichtung hiervon abweichende Erstreckung aufweisen kann. An dieser Stirnseite 16 des Standard-Transportcontainers 10 kann eine mit dem Versorgungsnetz verbundene Multikupplung 18 vorgesehen sein, über die der Standard-Transportcontainer 10 an eine Andockstation 20 angedockt werden kann. Die Andockstation 20 kann wiederum mit einer Backbone-Struktur verbunden sein, mit der über die Multikupplung 18 und die Andockstation 20 Stoff, Energie und/oder Information ausgetauscht werden kann. Insbesondere kann dadurch der Standard-Transportcontainer 10 mit genügend Stoff, Energie und/oder Information versorgt werden, um mit Hilfe der in dem Standard-Transportcontainer 10 vorgesehenen Prozessaggregaten 12 eine chemische Reaktion durchzuführen. Die Produkte und/oder Rest- und Abfallstoffe können nach Durchführung der chemischen Reaktion gegebenenfalls über die Multikupplung 18 und/oder zu der Multikupplung 18 separate Anschlüsse und die Andockstation 20 der Backbone-Struktur zugeführt werden. Insbesondere ist es möglich die chemischen Reaktion innerhalb des Standard-Transportcontainers 10 autonom durchzuführen, das heißt der Standard-Transportcontainer 10 kann von der Andockstation 20 getrennt positioniert sein, wenn die chemische Reaktion, insbesondere eine chemische Batch-Reaktion und/oder eine kontinuierliche Reaktion, durchgeführt wird.

Das in Fig.3 dargestellte Prozessaggregat 12 weist ein Gestell 22 auf, das die Erstreckung des Prozessaggregats 12 in Längsrichtung und in Querrichtung begrenzt. In das Gestell 22 ist eine Betriebseinheit 24 eingesetzt, die beispielsweise als Reaktor oder Rührkessel ausgestaltet ist. Unterhalb der Betriebseinheit 24 ist zwischen der Betriebseinheit 24 und einem mit dem Gestell 22 verbundenen Boden 26 ein Unterstützungsbereich 28 vorgesehen, in dem Unterstützungsapparate, beispielsweise Messgeräte 30 zum Überwachen und/oder Regeln von Betriebsparametern der Betriebseinheit 24, angeordnet sind. Mit dem Boden 26 und/oder mit dem Gestell 22 sind Füße 32 verbunden, über die das Gestell 22 und damit das Prozessaggregat 12 in dem Standard-Transportcontainer 10 befestigt werden kann. Oberhalb der Betriebseinheit 24 ist ein Schnittstellenmodul 34 vorgesehen, über das die Betriebseinheit 24 mit dem Versorgungsnetz 14 verbunden werden kann. Insbesondere enthält das Schnittstellenmodul 34 die zum Betrieb der Betriebseinheit 24 vorgesehene Regelungs- und Prozessleittechnik, wobei insbesondere Informationen über den Zustand der Betriebseinheit 24 über das Schnittstellenmodul an das Versorgungsnetz 14 weitergegeben werden können, um weiteren Prozessaggregaten 12 den Zugang zu diesen Informationen zu ermöglichen. Ein Stoffaustausch zwischen der Betriebseinheit 24 und dem Versorgungsnetz 14 kann beispielsweise über miteinander verbindbare Rohrleitungen 36 erfolgen.

Wie in Fig. 4 dargestellt kann in dem Unterstützungsbereich 28 insbesondere eine Abwasserleitung 38 vorgesehen sein, die nicht notwendigerweise mit der Betriebseinheit 24 des dargestellten Prozessaggregats 12 verbunden sein muss. Die Abwasserleitung 38 kann an zwei oder mehr Stellen einen Rohrflansch 40 aufweisen, über den die Abwasserleitung 38 mit einer entsprechenden Abwasserleitung 38 eines benachbarten Prozessaggregats 12 verbunden werden kann. Dies ermöglicht es Abwasser, Produkt oder sonstige Stoffe von einem Prozessaggregats 12 über miteinander verbundene Abwasserleitungen 38 durch mehrere Prozessaggregate 12 bis zu einem beabsichtigten Ort hindurchzufördern. Wie in Fig. 5 dargestellt kann hierzu das Prozessaggregat 12, insbesondere mehrere oder sogar sämtliche in dem Standard-Transportcontainer 10 vorgesehene Prozessaggregate, eine Fördereinheit 42 aufweisen, beispielsweise eine Pumpe. Durch die Fördereinheit 42 können insbesondere zwischenzeitlich in der Abwasserleitung 38 aufgetretene Druckverluste kompensiert werden. Ferner kann in dem Unterstützungsbereich 28 ein Unterstützungsaggregat in Form einer Filtereinrichtung 44 vorgesehen sein, beispielsweise um ein Produkt von erwünschten Feststoffpartikel zu befreien.

**Patentansprüche**

1. Kombination eines Standard-Transportcontainers und eines Prozessaggregats (12) zur Unterstützung und/oder Durchführung einer verfahrenstechnischen Grundoperation für eine chemische Reaktion und zur Ausbildung einer innerhalb des Standard-Transportcontainers (10), insbesondere nach DIN ISO 668, realisierten Produktionsanlage für die Durchführung dieser chemischen Reaktion unter Verwendung mehrerer derartiger mittelbar oder unmittelbar miteinander verbundenen Prozessaggregate (12) in dem einem gemeinsamen Standard-Transportcontainer (10) mit einer Betriebseinheit (24) zur Bereitstellung eines Beitrags für die verfahrenstechnische Grundoperation und einem Gestell (22) zur Aufnahme der Betriebseinheit (24), wobei das Gestell (22) eine Erstreckung $d_L$ in Längsrichtung aufweist, die einem ganzzahligen Vielfachen $Z_L$ eines ganzzahligen Teils $N_L$ einer Erstreckung $L_L$ in Längsrichtung eines Innenraums des Standard-Transportcontainers (10) entspricht und/oder das Gestell (22) eine Erstreckung $d_Q$ in Querrichtung aufweist, die einem ganzzahligen Vielfachen $Z_Q$ eines ganzzahligen Teils $N_Q$ einer Erstreckung $L_Q$ in Querrichtung des Innenraums des Standard-Transportcontainers (10) entspricht.

2. Kombination nach Anspruch 1 **dadurch gekennzeichnet, dass** das Gestell (22) eine Höhe $d_H$ aufweist, die im Wesentlichen einem ganzzahligen Vielfachen $Z_H$ des ganzzahligen Teils $N_L$ der Erstreckung $L_L$ in Längsrichtung oder des ganzzahligen Teils $N_Q$ der Erstreckung $L_Q$ in Querrichtung des Innenraums des Standard-Transportcontainers (10) entspricht.

3. Kombination nach Anspruch 1 oder 2 **dadurch gekennzeichnet, dass** die minimale Erstreckung $d_{min}$ des Gestells (22) in Längsrichtung und/oder in Querrichtung bei einer Gesamterstreckung L des Innenraums des Standard-Transportcontainers (10) in Längsrichtung beziehungsweise in Querrichtung und einer ganzzahligen Teilung N unter Berücksichtigung eines Spaltmaßes S nach $d_{min} = (L-(N+1)S)/N$ bestimmt ist, wobei insbesondere 1 mm $\leq$ S $\leq$ 50 mm, vorzugsweise 2 mm $\leq$ S $\leq$ 30 mm, weiter bevorzugt 3 mm $\leq$ S $\leq$ 20 mm und besonders bevorzugt 4 mm $\leq$ S $\leq$ 15 mm gilt.

4. Kombination nach einem der Ansprüche 1 bis 3 **dadurch gekennzeichnet, dass** die minimale Erstreckung $d_{L,min}$ des Gestells (22) in Längsrichtung im Wesentlichen der minimalen Erstreckung $d_{Q,min}$ des Gestells (22) in Querrichtung entspricht, wobei insbesondere die minimale Höhe $d_{H,min}$ des Gestells (22) im Wesentlichen der minimalen Erstreckung $d_{L,min}$ des Gestells (22) in Längsrichtung und/oder der minimalen Erstreckung $d_{Q,min}$ des Gestells (22) in Querrichtung entspricht.

5. Kombination nach einem der Ansprüche 1 bis 4 **dadurch gekennzeichnet, dass** innerhalb des Gestells (22), insbesondere unterhalb der Betriebseinheit (24), eine mit der Betriebseinheit (24) verbundene oder mit der Betriebseinheit (24) unverbundene Abwasserleitung (38) vorgesehen ist, wobei die Abwasserleitung (38) mindestens einen, vorzugsweise mindestens zwei, aus dem Gestell (22) seitlich heraus weisenden Rohrflansch (40) aufweist.

6. Kombination nach einem der Ansprüche 1 bis 5 **dadurch gekennzeichnet, dass** mindestens eine mit der Betriebseinheit (24) verbundene oder mit der Betriebseinheit (24) unverbundene Fördereinheit (42) zum Stofftransport von und/oder zu einem benachbarten Prozessaggregat (12) vorgesehen ist.

7. Kombination nach einem der Ansprüche 1 bis 6 **dadurch gekennzeichnet, dass** das Gestell (22) mit einem Boden (26) verbunden ist, wobei der Boden (26) über Füße (32) zur Befestigung mit einem Untergrund beabstandet zu dem Untergrund positioniert ist.

8. Kombination nach einem der Ansprüche 1 bis 7 **dadurch gekennzeichnet, dass** unterhalb der Betriebseinheit (24) mit der Betriebseinheit (24) verbundene Unterstützungsapparate (30, 44), insbesondere Messeinrichtungen (30), für den Betrieb der Betriebseinheit (24) vorgesehen sind.

9. Kombination nach einem der Ansprüche 1 bis 8 **dadurch gekennzeichnet, dass** oberhalb der Betriebseinheit (24) ein mit der Betriebseinheit (24) verbundenes Schnittstellenmodul (34) zur Aufnahme von Stoff und/oder Energie und/oder Information vorgesehen ist.

10. Verwendung mehrerer mittelbar oder unmittelbar miteinander verbundener Prozessaggregate (12) in einem gemeinsamen Standard-Transportcontainer (10), insbesondere nach DIN ISO 668, zur Ausbildung einer Produktionsanlage für die Durchführung einer chemischen Reaktion, wobei jedes Aggregat und der Container eine Kombination nach einem der Ansprüche 1-9 ist.

**Claims**

1. Combination of a standard transport container and a processing unit (12) for supporting and/or carrying out a process engineering unit operation for a chemical reaction and for construction of a production system, implemented within the standard transport container (10), in particular as specified in DIN ISO 668, for carrying out said chemical reaction using a plurality of such processing units (12) that are connected to one another directly or indirectly in the one shared standard transport container (10), having an operating unit (24) for providing a contribution to the process engineering unit operation and a frame (22) for accommodating the operating unit (24),

wherein the frame (22) has an extension $d_L$ in the longitudinal direction which corresponds to an integral multiple $Z_L$ of an integral portion $N_L$ of an extension $L_L$ in the longitudinal direction of an interior of the standard transport container (10) and/or the frame (22) has an extension $d_Q$ in the transverse direction which corresponds to an integral multiple $Z_Q$ of an integral portion $N_Q$ of an extension $L_Q$ in the transverse direction of the interior of the standard transport container (10).

2. Combination according to Claim 1, **characterized in that** the frame (22) has a height $d_H$ which corresponds substantially to an integral multiple $Z_H$ of the integral portion $N_L$ of the extension $L_L$ in the longitudinal direction or of the integral portion $N_Q$ of the extension $L_Q$ in the transverse direction of the interior of the standard transport container (10) .

3. Combination according to Claim 1 or 2, **characterized in that** the minimal extension $d_{min}$ of the frame (22) in the longitudinal direction and/or in the transverse direction for a total extension L of the interior of the standard transport container (10) in the longitudinal direction and/or in the transverse direction and an integral division N, taking into account a clearance S, is determined according to $d_{min} = (L-(N+1)S/N$, wherein, in particular, $1\ mm \leq S \leq 50\ mm$, preferably $2\ mm \leq S \leq 30\ mm$, further preferably $3\ mm \leq S \leq 20\ mm$, and particularly preferably $4\ mm \leq S \leq 15\ mm$.

4. Combination according to any one of Claims 1 to 3, **characterized in that** the minimal extension $d_{L,min}$ of the frame (22) in the longitudinal direction corresponds substantially to the minimal extension $d_{Q,min}$ of the frame (22) in the transverse direction, wherein, in particular, the minimal height $d_{H,min}$ of the frame (22) corresponds substantially to the minimal extension $d_{L,min}$ of the frame (22) in the longitudinal direction and/or the minimal extension $d_{Q,min}$ of the frame (22) in the transverse direction.

5. Combination according to any one of Claims 1 to 4, **characterized in that**, within the frame (22), in particular below the operating unit (24), a wastewater conduit (38) that is connected to the operating unit (24) or is unconnected to the operating unit (24) is provided, wherein the wastewater conduit (38) has at least one, preferably at least two, tube flange(s) (40) facing laterally out of the frame (22).

6. Combination according to any one of Claims 1 to 5, **characterized in that** at least one conveying unit (42) that is connected to the operating unit (24) or is unconnected to the operating unit (24) is provided for mass transfer from and/or to an adjacent processing unit (12).

7. Combination according to any one of Claims 1 to 6, **characterized in that** the frame (22) is connected to a base (26), wherein the base (26) is positioned via feet (32) spaced apart from the substrate for fastening to a substrate.

8. Combination according to any one of Claims 1 to 7, **characterized in that** support apparatuses (30, 44), in particular measuring appliances (30) that are connected to the operating unit (24) are provided beneath the operating unit (24) for operation of the operating unit (24).

9. Combination according to any one of Claims 1 to 8, **characterized in that** an interface module (34) that is connected to the operating unit (24) is provided above the operating unit (24) for the accommodation of matter and/or energy and/or information.

10. Use of a plurality of processing units (12) that are connected to one another directly or indirectly in a shared standard transport container (10), in particular as specified in DIN ISO 668, for construction of a production system for carrying out a chemical reaction, wherein each aggregate and the container is a combination according to any of Claims 1-9.

**Revendications**

1. Combinaison d'un conteneur de transport standard et d'un ensemble de traitement (12) pour le soutien et/ou la réalisation d'une opération de base de procédé pour une réaction chimique et pour la formation d'une installation de production réalisée à l'intérieur du conteneur de transport standard (10), notamment selon la norme DIN ISO 668, pour l'exécution de cette réaction chimique en utilisant plusieurs tels ensembles de traitement (12) reliés indirectement ou directement les uns aux autres dans le conteneur de transport standard commun (10), comprenant une unité d'exploitation (24) destinée à fournir une contribution à l'opération de base de procédé, et un châssis (22) destiné à recevoir l'unité d'exploitation (24),

le châssis (22) présentant une étendue $d_L$ dans la direction longitudinale qui correspond à un multiple entier $Z_L$ d'une fraction entière $N_L$ d'une étendue $L_L$ dans la direction longitudinale d'un espace intérieur du conteneur de transport standard (10), et/ou le châssis (22) présentant une étendue $d_Q$ dans la direction transversale qui correspond à un multiple entier $Z_Q$ d'une fraction entière $N_Q$ d'une étendue $L_Q$ dans la direction transversale de l'espace intérieur du conteneur de transport standard (10).

2. Combinaison selon la revendication 1, **caractérisée en ce que** le châssis (22) présente une hauteur $d_H$ qui correspond essentiellement à un multiple entier $Z_H$ de la fraction entière $N_L$ de l'étendue $L_L$ dans la direction longitudinale ou de la fraction entière $N_Q$ de l'étendue $L_Q$ dans la direction transversale de l'espace intérieur du conteneur de transport standard (10).

3. Combinaison selon la revendication 1 ou 2, **caractérisée en ce que** l'étendue minimale $d_{min}$ du châssis (22) dans la direction longitudinale et/ou dans la direction transversale à une étendue totale L de l'espace intérieur du conteneur de transport standard (10) dans la direction longitudinale ou dans la direction transversale et une division entière N est déterminée en prenant en compte une mesure de fente S selon $d_{min} = (L- (N + 1)S)/N$, avec notamment $1 \text{ mm} \leq S \leq 50 \text{ mm}$, de préférence $2 \text{ mm} \leq S \leq 30 \text{ mm}$, de manière davantage préférée $3 \text{ mm} \leq S \leq 20 \text{ mm}$ et de manière particulièrement préférée $4 \text{ mm} \leq S \leq 15 \text{ mm}$.

4. Combinaison selon l'une quelconque des revendications 1 à 3, **caractérisée en ce que** l'étendue minimale $d_{L,min}$ du châssis (22) dans la direction longitudinale correspond essentiellement à l'étendue minimale $d_{Q,min}$ du châssis (22) dans la direction transversale, la hauteur minimale $d_{H,min}$ du châssis (22) correspondant notamment essentiellement à l'étendue minimale $d_{L,min}$ du châssis (22) dans la direction longitudinale et/ou à l'étendue minimale $d_{Q,min}$ du châssis (22) dans la direction transversale.

5. Combinaison selon l'une quelconque des revendications 1 à 4, **caractérisée en ce qu'**une conduite d'eau résiduaire (38) reliée avec l'unité d'exploitation (24) ou non reliée avec l'unité d'exploitation (24) est prévue à l'intérieur du châssis (22), notamment en dessous de l'unité d'exploitation (24), la conduite d'eau résiduaire (38) comprenant au moins une, de préférence au moins deux brides tubulaires (40) orientées latéralement vers l'extérieur du châssis (22).

6. Combinaison selon l'une quelconque des revendications 1 à 5, **caractérisée en ce qu'**au moins une unité d'acheminement (42) reliée avec l'unité d'exploitation (24) ou non reliée avec l'unité d'exploitation (24), destinée au transport de matière depuis et/ou vers un ensemble de traitement voisin (12), est prévue.

7. Combinaison selon l'une quelconque des revendications 1 à 6, **caractérisée** en ce le châssis (22) est relié avec un fond (26), le fond (26) étant positionné, par l'intermédiaire de pieds (32) pour la fixation avec un sol, à distance du sol.

8. Combinaison selon l'une quelconque des revendications 1 à 7, **caractérisée en ce que** des appareils de soutien (30, 44), notamment des dispositifs de mesure (30), reliés avec l'unité d'exploitation (24), pour l'exploitation de l'unité d'exploitation (24), sont prévus en dessous de l'unité d'exploitation (24).

9. Combinaison selon l'une quelconque des revendications 1 à 8, **caractérisée en ce qu'**un module d'interface (34) relié avec l'unité d'exploitation (24), destiné à la réception de matière et/ou d'énergie et/ou d'informations, est prévu au-dessus de l'unité d'exploitation (24).

10. Utilisation de plusieurs ensembles de traitement (12) reliés indirectement ou directement les uns aux autres dans un conteneur de transport standard commun (10), notamment selon la norme DIN ISO 668, pour la formation d'une installation de production pour l'exécution d'une réaction chimique, chaque ensemble et le conteneur étant une combinaison selon l'une quelconque des revendications 1 à 9.

Fig. 1

Fig. 2

Fig. 3

10

22

32

32

40

28

38

40

## Fig. 4

10

22

42

30

32

44

30

28

26

## Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP RP720072013 A
- FR 2837495 A1